Europäisches Patentamt

European Patent Office

Office européen des brevets

(11) Veröffentlichungsnummer: **0 061 561**
**B1**

(12) **EUROPÄISCHE PATENTSCHRIFT**

(45) Veröffentlichungstag der Patentschrift:
**22.05.85**

(21) Anmeldenummer: **82100296.1**

(22) Anmeldetag: **16.01.82**

(51) Int. Cl.⁴: **F 16 K 27/00,** F 16 K 11/00,
E 03 C 1/042

(54) **Wandhängende Mischbatterie.**

(30) Priorität: **30.03.81 DE 3112616**

(43) Veröffentlichungstag der Anmeldung:
**06.10.82 Patentblatt 82/40**

(45) Bekanntmachung des Hinweises auf die Patenterteilung:
**22.05.85 Patentblatt 85/21**

(84) Benannte Vertragsstaaten:
**AT BE FR GB IT NL**

(56) Entgegenhaltungen:
**DE - A - 2 535 427**
**DE - A - 2 930 518**
**FR - A - 1 374 036**
**FR - A - 1 476 080**
**US - A - 1 916 553**

(73) Patentinhaber: **IDEAL-STANDARD GMBH, Euskirchener Strasse 80, D-5300 Bonn 1 (DE)**

(72) Erfinder: **Nolden, Werner, Trierer Strasse 33, D-5560 Wittlich (DE)**

## Beschreibung

Die Erfindung bezieht sich auf eine Wandmischbatterie mit einem Wasserzulaufkanal für das kalte Wasser und einem Wasserzulaufkanal für das warme Wasser sowie einem Wasserablaufkanal für das Mischwasser, bestehend aus einzelnen, durch ein Abdeckgehäuse verdeckte Bauelemente, wobei der Wasserzulaufkanal für das kalte Wasser und der Wasserzulaufkanal für das warme Wasser mit Anschlussstücken für eine direkte Verbindung mit den Rohrenden der Wasserleitungen versehen, und diese Anschlussstücke in veränderlicher gegenseitiger Distanz über eine Rohrbrücke miteinander sowie mit mindestens einem Misch- und Absperrorgan verbunden sind.

Nach der DE-A-2930518 ist vorgesehen, dass die Anschlussstücke aus mit ihrem einen Ende mit den Zuflussleitungen zu verbindenden Kupferrohren oder Kupferrohrwinkeln bestehen, deren nach der Verankerung der Montageschablone und der Fertigstellung der Wand jeweils aus der Wand vorstehendes Teil auf die für den Armaturenanschluss erforderliche Länge abzulängen ist. Eine derartige Montageschablone ist zwar für eine Ausrichtung vor einer Verfliesung zweckmässig, bietet aber keinerlei Ausrichtungsmöglichkeiten bei einer Endmontage, nach der Verfliesung der Wände.

Eine Mischbatterie gemäss dem Oberbegriff der Erfindung ist in der DE-A-2535427 beschrieben und dargestellt. Diese Einrichtung ist ohne S-Anschlüsse vorgesehen; dabei sind die Wasserzulaufstutzen von der Verbindungsbrücke gesonderte Teile, die die Absperrorgane enthalten und unmittelbar mit den Wasserleitungsmuffen in der Wand verbindbar sind, und wobei die Verbindungsbrücke lösbar mit dem Wasserzulaufstutzen verbunden ist. Ein Nachteil bei dieser Ausführung ist darin zu sehen, dass das die einzelnen Bauelemente verdeckende Gehäuse gegenüber den batterieseitigen Anschlussstücken unverstellbar angeordnet ist. Dies bedeutet, dass bei einer nicht genau horizontalen Lage der Anschlussenden der Wasserleitungen zueinander eine Korrektur bei der Montage der bekannten Mischbatterien nicht mehr möglich ist. Hinzu kommt, dass die bisher verwendeten Rohrbrücken, welche die Anschlussstücke miteinander verbinden, Spezialanfertigungen darstellen, um sicherzustellen, dass auch bei einer ungenauen Ausrichtung der Austrittsöffnungen der Anschlussstücke zueinander der Einbau der Rohrbrücken keine Schwierigkeiten bereitet. Zu diesem Zweck bestehen die Rohrbrücken aus zwei Teilen, die über ein kurzes Schlauchstück aus Kunststoff miteinander gekoppelt sind.

Der Erfindung liegt die Aufgabe zugrunde, diese Nachteile zu beseitigen und eine Wandmischbatterie der eingangs genannten Art zu schaffen, die einfach in ihrem Aufbau und sicher in der Wirkungsweise ist.

Erreicht ist dieses Ziel in vorteilhafter Weise dadurch, dass das Abdeckgehäuse auf einer Trägerplatte vorgesehen ist, die um die Längsachse eines der beiden Anschlussstücke parallel zur Wand schwenk- oder drehbar und somit horizontal ausrichtbar ist, und dass hierfür die Trägerplatte zwei Durchbrüche für die Anschlussstücke aufweist, von denen der eine Durchbruch einem Aussendurchmesser eines der Anschlussstücke entspricht, welches gleichzeitig als Schwenklager für die Trägerplatte dient, während der andere Durchbruch das zugehörige Anschlussstück mit Abstand umgibt.

Weitere vorteilhafte Ausgestaltungen der Erfindung sind in den Unteransprüchen 2–4 beansprucht.

In der Zeichnung ist der Erfindungsgegenstand in einem Ausführungsbeispiel dargestellt; und zwar zeigen:

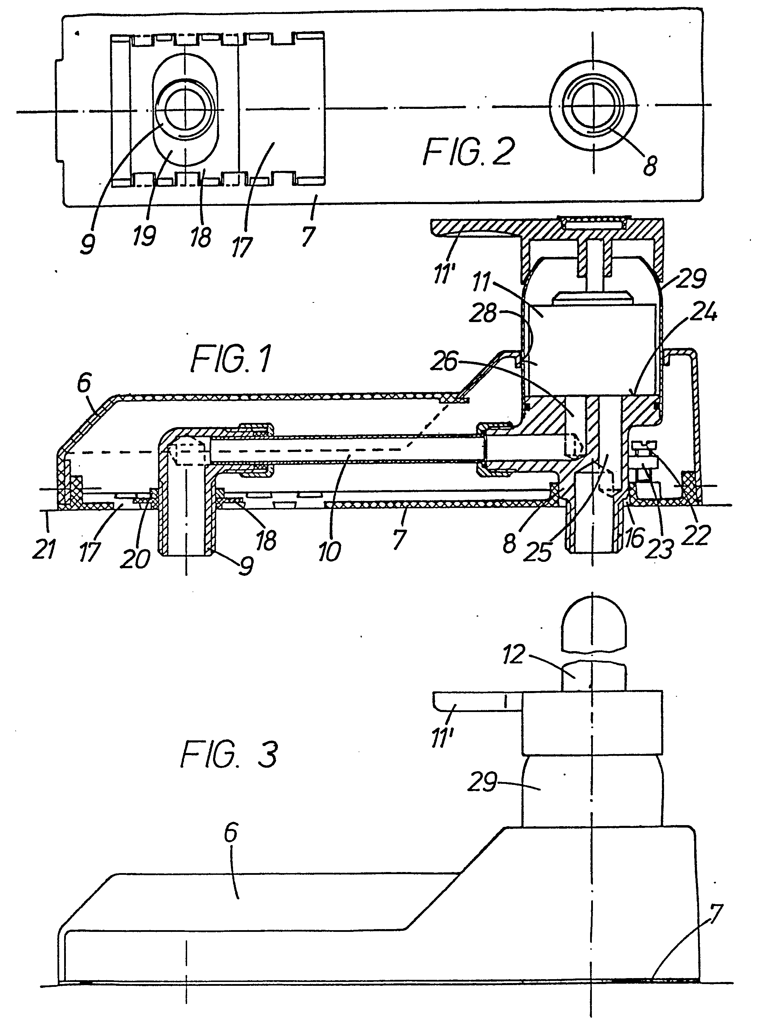

Fig. 1 eine erfindungsgemässe Mischbatterie als Einhebel-Wannenfüll- und Brausebatterie im Längsschnitt;

Fig. 2 eine Rückansicht;

Fig. 3 eine Draufsicht;

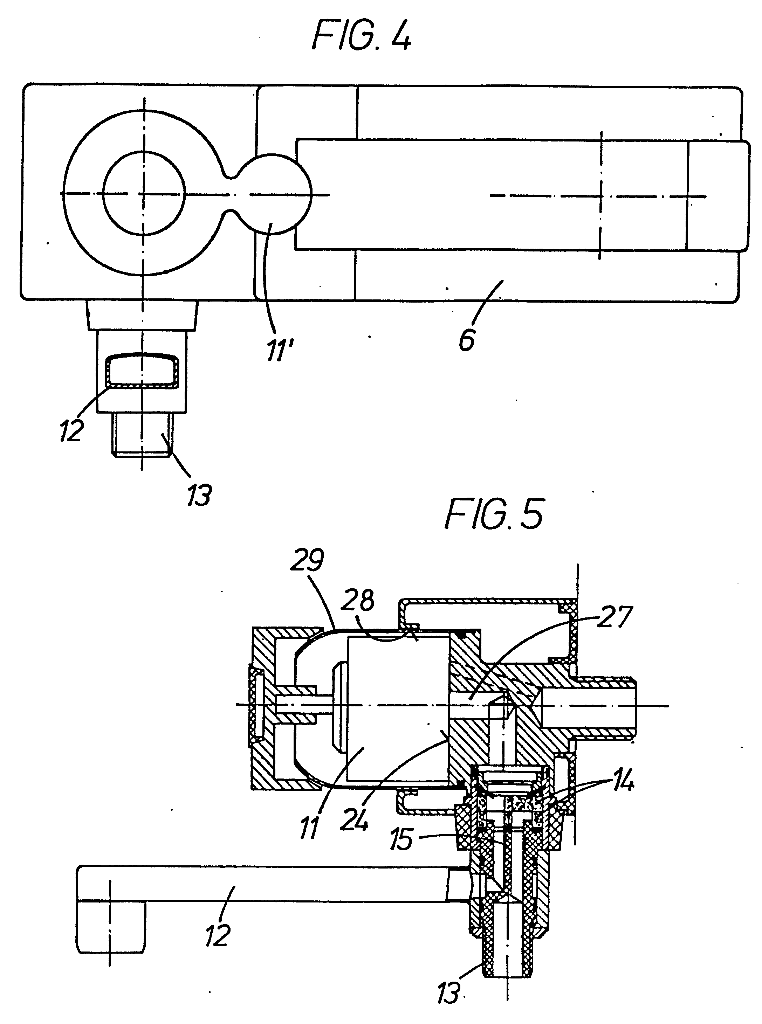

Fig. 4 eine Vorderansicht und

Fig. 5 eine Seitenansicht im Längsschnitt.

Darin ist mit 6 ein Abdeckgehäuse bezeichnet, welches zusammen mit einer Trägerplatte 7 das Gehäuse der Mischbatterie bildet. Das Abdeckgehäuse 6 verdeckt zwei Anschlussstücke 8 und 9 für eine direkte Verbindung mit den Rohrenden einer nicht dargestellten Kalt- und Warmwasserleitung. Die Anschlussstücke 8, 9 sind in veränderlicher gegenseitiger Distanz über eine von Hand biegsame und nach Art eines Eckventilröhrchens gestaltete Rohrbrücke 10 miteinander verbunden. Sie sind ferner an ein Misch- und Absperrorgan 11 angeschlossen, welches mit einem Hebel 11' betätigt wird. Von dem Misch- und Absperrorgan 11 strömt das Wasser entweder zu einem Schwenkauslauf 12 für den Badewannenbetrieb oder zu einem Brauseabgang 13. Hierfür steht der Schwenkauslauf 12 in der Weise mit einem scheibenförmigen Steuerelemente 14 aufweisenden Umschaltventil 15 in Verbindung, dass in Abhängigkeit von der Position des Schwenkauslaufs 12 entweder dieser oder die Brause in Betrieb ist.

Wie ersichtlich, ist die Trägerplatte 7 mit zwei Durchbrüchen 16 und 17 für die Anschlussstücke 8, 9 versehen, von denen der eine Durchbruch 16 einem Aussendurchmesser des Anschlussstückes 8 entspricht. Auf diese Weise dient das Anschlussstück gleichzeitig als Schwenklager für die Trägerplatte 7. Der andere Durchbruch 17 umgibt das zugehörige Anschlussstück 9 mit Abstand. Wie ersichtlich, ist dieser Durchbruch 17 von einer Andrückplatte 18 übergriffen, die eine Öffnung 19 für das Anschlussstück 9 aufweist, auf dem eine Mutter 20 gehalten ist, mittels welcher die Trägerplatte in ihrem Endbereich über die verschiebbare Andrückplatte 18 gegen eine mit 21 angedeutete Wand schraubbar ist, während sie in ihrem anderen Endbereich mit einer Andrückschraube 22 zusammenwirkt, die über eine Gewindeöffnung eines seitlichen Vorsprungs 23 des als Schwenklager dienenden Anschlussstückes 8 an die Trägerplatte 7 angreift. Es ist ferner ersichtlich, dass das Anschlussstück 8 mit dem Misch- und Absperrorgan 11 kombiniert ist und hierfür eine Anschlussfläche 24 aufweist, in der die Wasserzulaufkanäle 25, 26 enden und von der ein zu dem Umschaltventil 15 führender Ablaufkanal 27 ausgeht. Das Misch- und Absperrorgan 11 durchdringt eine Öffnung 28 des Abdeckgehäuses 6, die dem Aussendurchmesser der Verkleidung 29 des Misch- und Absperrorgans 11 entspricht. Bei einer solchen Ausführung ist es möglich, das Misch- und Absperrorgan selbst gleichzeitig als Schwenklager für das Abdeckgehäuse zu benutzen.

Die Wandmontage der Wandmischbatterie geht so vor sich, dass zunächst die Anschlussstücke 8, 9 durch die Trägerplatte 7 gesteckt und mit den Anschlussenden der Wasserleitungen verschraubt werden. Anschliessend wird die Rohrbrücke 10 angebracht sowie die Trägerplatte 7 horizontal ausgerichtet und in dieser Position mittels der Schraubelemente 20, 22 fixiert. Nach der dann erfolgenden Anbringung des Abdeckgehäuses sowie des Misch- und Absperrorgans 11 nebst Schwenkauslauf 12, Umschaltventil 15 und der Brause ist die Montage beendet und die Wandmischbatterie betriebsbereit.

Wie bereits erwähnt, ist die dargestellte und beschriebene Ausführung nur ein Beispiel zur Verwirklichung der Erfindung, und diese ist nicht darauf beschränkt. Ferner kann die Erfindung selbstverständlich auch bei reinen Brausebatterien und Küchenbatterien zum Einsatz kommen.

**Patentansprüche**

1. Wandmischbatterie mit einem Wasserzulaufkanal (26) für das kalte Wasser und einem Wasserzulaufkanal (25) für das warme Wasser sowie einem Wasserablaufkanal (27) für das Mischwasser, bestehend aus einzelnen, durch ein Abdeckgehäuse (6) verdeckten Bauelementen, wobei der Wasserzulaufkanal (26) für das kalte Wasser und der Wasserzulaufkanal (25) für das warme Wasser mit Anschlussstücken (8, 9) für eine direkte Verbindung mit den Rohrenden der Wasserleitungen versehen, und diese Anschlussstücke in veränderlicher gegenseitiger Distanz über eine Rohrbrücke (10) miteinander sowie mit mindestens einem Misch- und Absperrorgan (11) verbunden sind, dadurch gekennzeichnet, dass das Abdeckgehäuse (6) auf einer Trägerplatte (7) vorgesehen ist, die um die Längsachse eines der beiden Anschlussstücke (8, 9) parallel zur Wand schwenk- oder drehbar und somit horizontal ausrichtbar ist, und dass hierfür die Trägerplatte (7) zwei Durchbrüche (16, 17) für die Anschlussstücke (8, 9) aufweist, von denen der eine Durchbruch (16) einem Aussendurchmesser eines (8) der Anschlussstücke entspricht, welches gleichzeitig als Schwenklager für die Trägerplatte (7) dient, während der andere Durchbruch (17) das zugehörige Anschlussstück (9) mit Abstand umgibt.

2. Wandmischbatterie nach Anspruch 1, dadurch gekennzeichnet, dass der das eine Anschlussstück (9) mit Abstand umgebende Durchbruch (17) der Trägerplatte (7) von einer Andrückplatte (18) übergriffen ist, die eine Öffnung (19) für das Anschlussstück (9) aufweist, auf dem eine Mutter (20) gehalten ist, mittels welcher die Trägerplatte (7) in ihrem einen Endbereich über die Andrückplatte (18) gegen die Wand schraubbar ist, während sie in ihrem anderen Endbereich mit einer Andrückschraube (22) zusammenwirkt, die über eine Gewindeöffnung eines seitlichen Vorsprungs (23) des als Schwenklager dienenden Anschlussstückes (8) an die Trägerplatte (7) angreift.

3. Wandmischbatterie nach Anspruch 1 oder 2, dadurch gekennzeichnet, dass die der Wand gegenüberliegende Seite des Anschlussstückes (8), um dessen Längsachse die Trägerplatte (7) schwenkbar ist, eine Anschlussfläche (24) für die Kombination mit einem Misch- und Absperrorgan (11) bildet, welches eine Öffnung (28) des Abdeckgehäuses (6, 7) durchdringt, die dem Aussendurchmesser des Misch- und Absperrorgans (11) entspricht, welches dadurch z. B. gleichzeitig als Schwenklager für das Abdeckgehäuse (6, 7) dient.

4. Wandmischbatterie nach einem oder mehreren der vorstehenden Ansprüche, dadurch gekennzeichnet, dass die Rohrbrücke (10) aus einem von Hand biegsamen Material besteht und nach Art eines Eckventilröhrchens gestaltet ist.

**Claims**

1. Wall mixing valve with a water supply duct (26) for the cold water and a water supply duct (25) for the hot water and a water drain duct (27) for the mixed water, consisting of individual components covered by a protective housing (6), wherein the water supply duct (26) for the cold water and the water supply duct (25) for the hot water are provided with connection pieces (8, 9) for a direct connection with the pipe ends of the water pipes, and these connection pieces are connected to one another at a changeable reciprocal distance via a pipe bridge (10) and to at least one mixing- and shuht-off element (11), characterised in that the protective housing (6) is provided on a carrier plate (7) which can be swivelled or rotated round the longitudinal axis of one of the two connection pieces (8, 9) parallel to the wall and hence can be horizontally aligned, and in that for this purpose the carrier plate (7) has two apertures (16, 17) for the connection pieces (8, 9), one aperture (16) of which corresponds to an outer diameter of one (8) of the connection pieces, which is used at the same time as a swivelling bearing for the carrier plate (7), whilst the other aperture (17) surrounds the associated connection piece (9) with clearance.

2. Wall mixing valve according to claim 1, characterised in that the aperture (17) of the carrier plate (7) which surrounds the one connection piece (9) with clearance is overlapped by a pressing plate (18) which has an aperture (19) for the connection piece (9) on which is held a nut (20) by means of which the carrier plate (7) can be screwed against the wall in one of its end regions by means of the pressing plate (18), whilst in its other end region it co-operates with a pressing screw (22) which engages on the carrier plate (7) by means of a threaded aperture of a lateral projection (23) of the connection piece (8) used as a swivelling bearing.

3. Wall mixing valve according to claim 1 or 2, characterised in that the side of the connection piece (8) opposite the wall, round whose longitudinal axis the carrier plate (7) can be swivelled, forms a connection surface (24) for the combination of the mixing- and shut-off element (11), which penetrates an aperture (28) of the protective housing (6, 7) which corresponds to the outer diameter of the mixing- and shut-off element (11), which is thus used at the same time e. g. as a swivelling bearing for the protective housing (6, 7).

4. Wall mixing valve according to one or more than one of the preceding claims, characterised in that the pipe bridge (10) consists of a manually flexible material and is shaped like a kind of angle valve pipe.

**Revendications**

1. Mélangeur mural comportant un canal d'arrivée (26) pour l'eau froide, et un autre canal d'arrivée (25) pour l'eau chaude, ainsi qu'un canal de départ (27) pour l'eau mélangée; ce mélangeur ayant ses organes constitutifs recouverts par un couvercle (6) qui fait partie du corps de l'appareil; le canal d'arrivée (26) d'eau froide, et le canal d'arrivée (25) d'eau chaude étant pourvus de raccords (8, 9) permettant une liaison directe avec les extrémités tubulaires des canalisations d'arrivée d'eau; ces raccords (8, 9) ayant un écartement variable, grâce à un pont tubulaire de liaison (10) disposé entre les raccords, qui sont associés, par ailleurs, à au moins un organe de mélange et d'arrêt (11); le mélangeur étant caractérisé en ce que le couvercle (6) est monté sur une plaque-support (7), qui peut pivoter autour de l'axe longitudinal de l'un des deux raccords (8, 9), en étant parallèle au mur, cette plaque pouvant être ainsi orientée à l'horizontale; et en ce que la plaque-support (7) comporte à cet effet deux ouvertures (16, 17), pour le passage des raccords (8, 9); l'une de ces ouvertures (16) correspondant au diamètre externe de l'un des raccords (8), qui sert en même temps de pivot pour la plaque-support (7); tandis que l'autre ouverture (17) de la plaque-support entoure le raccord correspondant (9) avec un écart.

2. Mélangeur mural selon la revendication 1, caractérisé en ce que l'ouverture (17) de la plaque-support (7) qui entoure l'un des raccords (9) avec un écart est associée à une plaque de serrage (18) qui recouvre cette ouverture (17), et présente un trou (19) pour le passage du raccord (9); un écrou (20) monté sur le raccord (9) servant à appliquer la plaque-support (7) contre le mur, du côté de l'une des extrémités de la plaque-support, par l'intermédiaire de la plaque de serrage (18) en visant l'écrou (20); la plaque-support (7) du côté de son autre extrémité, coopérant de même avec une vis de serrage (22) montée dans un bossage latéral (23) du raccord (8), qui sert de pivot pour la plaque-support (7), ainsi poussée contre le mur par la vis de serrage (22).

3. Mélangeur mural selon l'une des revendications 1 ou 2, caractérisé en ce que le raccord (8) servant de pivot à la plaque-support (7) comporte, du côté opposé au mur de fixation, une face de raccordement (24) servant à associer ce raccord à un organe de mélange et d'arrêt (11), qui passe à travers une ouverture (28) du couvercle (6) du corps du mélangeur; cette ouverture (28) correspondant au diamètre externe de l'organe de mélange et d'arrêt, qui sert ainsi en même temps de pivot pour le couvercle (6).

4. Mélangeur mural selon l'une des revendications 1 à 3, caractérisé en ce que le pont tubulaire de liaison (10) est confectionné en un matériau pouvant être déformé en flexion à la main, et présente une configuration analogue à celle d'un petit tube d'un robinet-vanne à soupape à brides d'équerre.

FIG. 2

FIG. 1

FIG. 3

## FIG. 4

## FIG. 5